# EUROPEAN PATENT APPLICATION

(11) **EP 4 592 816 A1**
(43) Date of publication of application: **30.07.2025**
(21) Application number: 25152743.8
(22) Date of filing: 20.01.2025
(51) Int. Cl.: G06F 3/12

(54) **DOCUMENT PROCESSING APPARATUS AND DOCUMENT PROCESSING PROGRAM**

(30) Priority: 24.01.2024 JP 2024009084
(71) Applicant: KYOCERA Document Solutions Inc., Osaka-shi, Osaka 540-8585 (JP)
(72) Inventor: MANABE, Hiroshi, Osaka-shi, Osaka, 540-8585 (JP); NAKATANI, Ryusuke, Osaka-shi, Osaka 540-8585 (JP)
(74) Representative: Herrero & Asociados, S.L.

(57) **Abstract**

A document processing apparatus (20) includes a document processor (25A) that executes a workflow including executing a specific processing with respect to an inputted document, and outputting an execution result to a specific destination. The document processor (25A) allows, when there is a remaining processing amount of the image processing operation permitted to the user, the operation device (21) to select all the workflows associated with the user, as the workflow to be executed. The document processor (25A) allows, when there is no remaining processing amount of the image processing operation, the operation device (21) to select only the workflow not including the image processing operation, out of all the workflows associated with the user, as the workflow to be executed.

## Description

### BACKGROUND

The present disclosure relates to a document processing apparatus that executes a workflow including executing a specific processing with respect to an inputted document, and outputting the processing result to a specific destination, and a document processing program.

A method to count usage history of an image processing operation, such as an optical character recognition (OCR) function included in a workflow to be executed, is known.

### SUMMARY

The disclosure proposes further improvement of the foregoing technique.

In an aspect, the disclosure provides a document processing apparatus including a document processor and an operation device. The document processor executes a workflow including executing a specific processing, including an image processing operation, with respect to an inputted document, and outputting an execution result to a specific destination. The operation device receives an input of an instruction from a user. The document processor allows, when there is a remaining processing amount of the image processing operation permitted to the user, the operation device to select all the workflows associated with the user, as the workflow to be executed. The document processor allows, when there is no remaining processing amount of the image processing operation, the operation device to select only the workflow not including the image processing operation, out of all the workflows associated with the user, as the workflow to be executed.

In another aspect, the disclosure provides a document processing program, configured to cause a computer to act as a document processor that executes a workflow including executing a specific processing, including an image processing operation, with respect to an inputted document, and outputting an execution result to a specific destination. The document processor allows, when there is a remaining processing amount of the image processing operation permitted to the user, an operation device to select all the workflows associated with the user, as the workflow to be executed. The document processor allows, when there is no remaining processing amount of the image processing operation, the operation device to select only the workflow not including the image processing operation, out of all the workflows associated with the user, as the workflow to be executed.

### BRIEF DESCRIPTION OF THE DRAWINGS

Fig. 1 is a block diagram showing a configuration of a system according to an embodiment of the disclosure;
Fig. 2 is a block diagram showing a configuration of a document processing apparatus shown in Fig. 1, constituted of a single PC;
Fig. 3 presents an example of an organization management table shown in Fig. 2;
Fig. 4 presents an example of a user management table shown in Fig. 2;
Fig. 5 presents an example of a group management table shown in Fig. 2;
Fig. 6 presents an example of a workflow management table shown in Fig. 2;
Fig. 7 presents an example of an apparatus management table shown in Fig. 2;
Fig. 8 presents an example of a remainder management table shown in Fig. 2;
Fig. 9 is a block diagram showing a configuration of the computer shown in Fig. 1, configured as a PC;
Fig. 10 is a block diagram showing a configuration of the image forming apparatus shown in Fig. 1, configured as an MFP;
Fig. 11 is a flowchart showing an operation of the document processing apparatus shown in Fig. 2, performed when the remaining number of sheets, permitted to the group for the image processing operation, is updated;
Fig. 12 is a flowchart showing an operation of the document processing apparatus shown in Fig. 2, performed when the user logs in thereto through a computer;
Fig. 13 is a flowchart showing an operation of the document processing apparatus shown in Fig. 2, performed when image processing operation information is specified in the workflow management table;
Fig. 14 is a flowchart showing an operation of the document processing apparatus shown in Fig. 2, performed when the document is uploaded through the computer;
Fig. 15 is a flowchart showing the workflow selection screen generation process shown in Fig. 14;
Fig. 16A presents an example of the workflow selection screen, generated through the workflow selection screen generation process shown in Fig. 15, and including all the workflows associated with the log-in user;
Fig. 16B presents an example of the workflow selection screen, generated through the workflow selection screen generation process shown in Fig. 15, and from which the workflow including the image processing operation is excluded, out of the workflows associated with the log-in user;
Fig. 17 is a sequence chart showing an operation of the system shown in Fig. 1, performed when the user logs in to the document processing apparatus through the image forming apparatus;
Fig. 18 is a sequence chart showing an operation of the system shown in Fig. 1, performed when the document read by the image forming apparatus is transmitted to the document processing apparatus;
Fig. 19 is a sequence chart of the operation performed when the image processing operation is included in Fig. 18; and
Fig. 20 is a flowchart showing the workflow identifying operation in Fig. 18.

### DETAILED DESCRIPTION

Hereafter, a document processing apparatus and a document processing program, according to an embodiment of the disclosure, will be described with reference to the drawings.

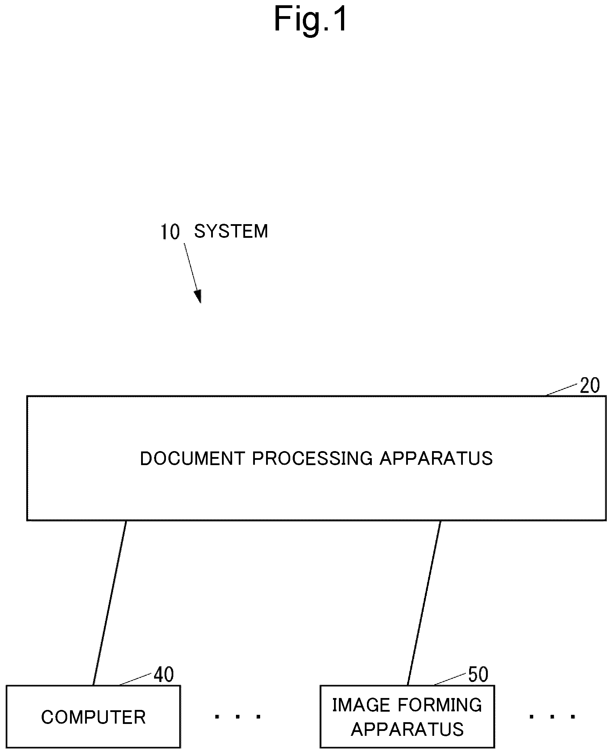

Fig. 1 is a block diagram showing a configuration of a system 10 according to the embodiment.

As shown in Fig. 1, the system 10 includes a document processing apparatus 20, configured as a web application that executes a specific processing with respect to an inputted document, and outputs the processing result to a specific destination. The document processing apparatus 20 may be constituted of a single computer such as a personal computer (PC), or a plurality of computers. The document processing apparatus 20 operates on a cloud.

The system 10 also includes a computer 40, for utilizing the document processing apparatus 20. The system 10 may additionally include one or more computers configured similarly to the computer 40. The computer 40 may be, for example, a PC, a smartphone, or a tablet. The computer 40 in the system 10 uploads a document, in the form of electronic data such as a portable document format (PDF) file, or a joint photographic experts group (JPEG) file, to a webpage including a screen for uploading data, provided by the document processing apparatus 20 (hereinafter, "upload screen"). As result, the document is inputted to the document processing apparatus 20.

The system 10 includes an image forming apparatus 50, for utilizing the document processing apparatus 20. The system 10 may additionally include one or more image forming apparatuses configured similarly to the image forming apparatus 50. The image forming apparatus 50 may be, for example, configured as a multifunction peripheral (MPF). The image forming apparatus in the system 10 reads an image from a document with a scanner, and transmits the document, in the form of the read image, to the document processing apparatus 20, thereby inputting the document to the document processing apparatus 20.

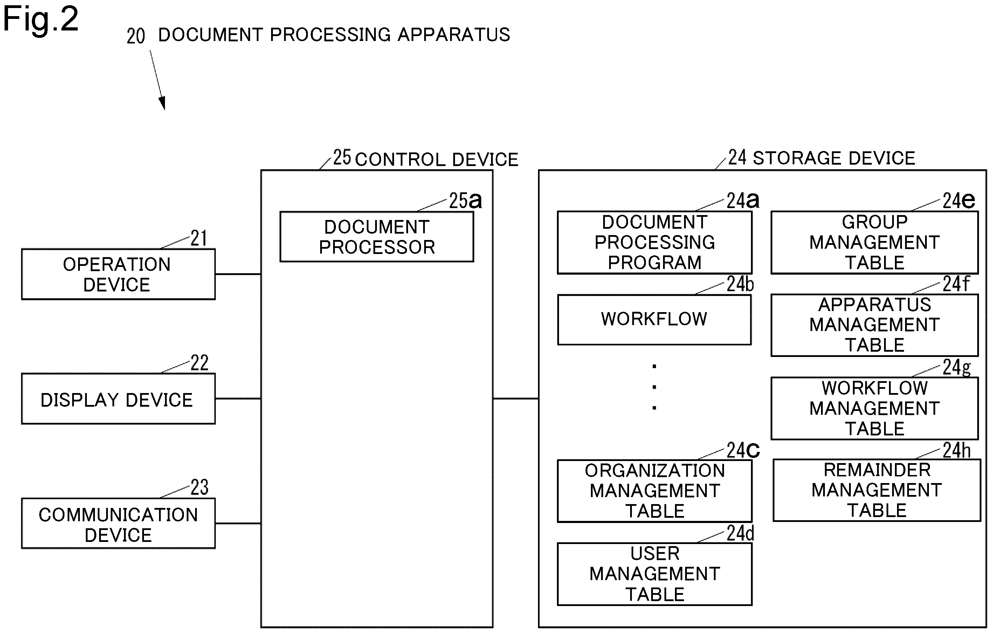

Fig. 2 is a block diagram showing a configuration of the document processing apparatus 20, constituted of a single PC.

As shown in Fig. 2, the document processing apparatus 20 includes an operation device 21 including, for example, a keyboard and a mouse for inputting various operations, a display device 22, for example including a liquid crystal display (LCD) for displaying various types of information, a communication device 23 that performs communication with an external device, via a network such as a local area network (LAN) or the internet, or directly through wired or wireless communication, a storage device 24 including a non-volatile memory unit such as a semiconductor memory or a hard disk drive (HDD), for storing various types of information, and a control device 25 that controls the overall operation of the document processing apparatus 20.

The storage device 24 contains a document processing program 24a, for executing a specific processing with respect to an inputted document, and outputting the processing result to a specific destination. The document processing program 24a may be, for example, installed in the document processing apparatus 20 during the manufacturing process thereof, additionally installed in the document processing apparatus 20 from an external storage medium such as a universal serial bus (USB) memory, or acquired by the control device 25 from a network through the communication device 23, and additionally installed in the document processing apparatus 20.

The storage device 24 contains a workflow 24b, in which the processing to be executed with respect to the document inputted to the document processing apparatus 20, and the destination to which the processing result is to be outputted, are specified. The storage device 24 may additionally include one or more workflows configured similarly to the workflow 24b. The workflow is, for example, generated by the user of the document processing apparatus 20. Examples of the processings specified in the workflow include the image processing operation with respect to the document, naming of the document file, on the basis of the information extracted from the document through the image processing operation, and sorting for deciding the destination of the document, on the basis of the information extracted from the document through the image processing operation. Examples of the image processing operation specified in the workflow include optical character recognition (OCR) for extracting characters included in the image of the document, noise removal for removing background noise from the image of the document, skew correction for correcting the skew of the image of the document in the range of approximately -5° to 5°, and automatic rotation for automatically rotating the image of the document in an increment of 90°. It is not mandatory that the workflow includes the image processing operation. The image processing operation may include forming an image on a recording sheet.

The storage device 24 contains an organization management table 24c, including information for managing an organization that utilizes the document processing apparatus 20.

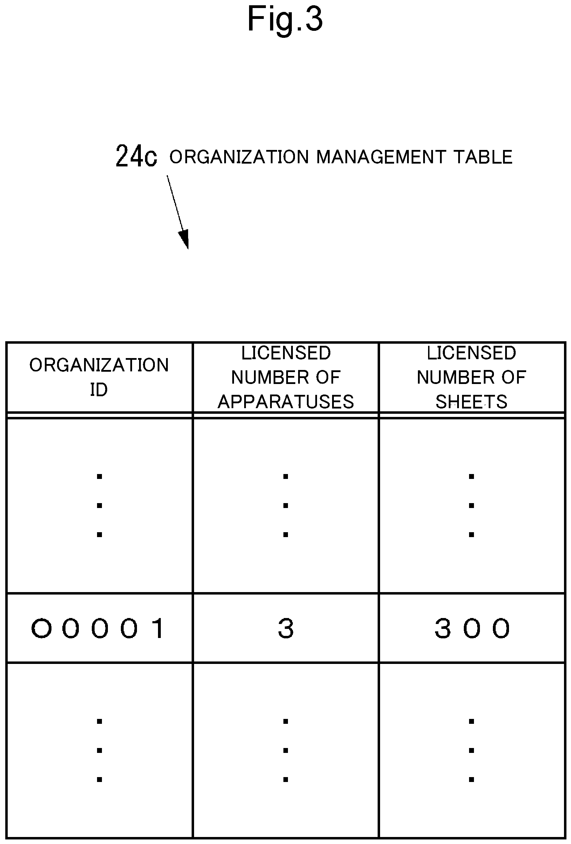

Fig. 3 presents an example of the organization management table 24c.

As shown in Fig. 3, the organization management table 24c indicates the identification information of the organization (hereinafter, "organization ID"), the number of image forming apparatuses permitted to utilize the workflow, with a license to the organization (hereinafter, "licensed number of apparatuses"), and the number of sheets per month permitted be subjected to the image processing operation, with a license to the organization (hereinafter, "licensed number of sheets"), with respect to each of the organizations. In Fig. 3, the organization management table 24c only shows a part of specific values. The organization ID is assigned by the control device 25 of the document processing apparatus 20, for example when the organization is registered in the document processing apparatus 20. For example, the document to be subjected to the image processing operation includes one or more pieces of image data each constituting one page. In this embodiment, the unit of the amount of the image data, included in the document to be subjected to the image processing operation, is represented by "number of sheets". The "number of sheets" is an example of the unit indicating the processed amount of the image data.

As shown in Fig. 2, the storage device 24 contains a user management table 24d for managing the users.

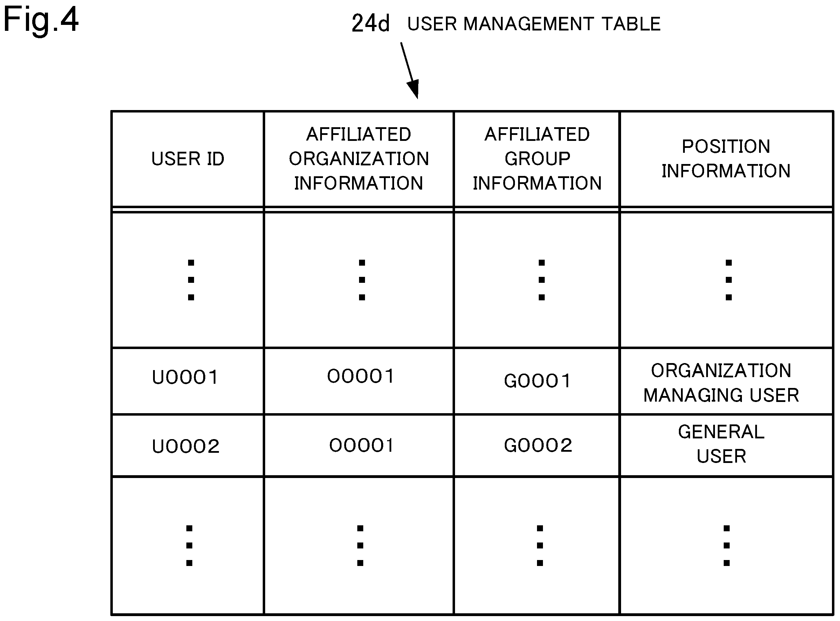

Fig. 4 presents an example of the user management table 24d.

As shown in Fig. 4, the user management table 24d indicates the identification information of the user (hereinafter, "user ID"), affiliated organization information indicating the organization to which the user belongs, with the organization ID, affiliated group information indicating the group to which the user belongs, with the identification information of the group (hereinafter, "group ID"), and position information indicating whether the user is an organization managing user or a general user, with respect to each of the users. In Fig. 4, the user management table 24d only shows a part of specific values. The user ID is assigned by the control device 25 of the document processing apparatus 20, when the user is registered in the document processing apparatus 20.

As shown in Fig. 2, the storage device 24 contains a group management table 24e for managing the group.

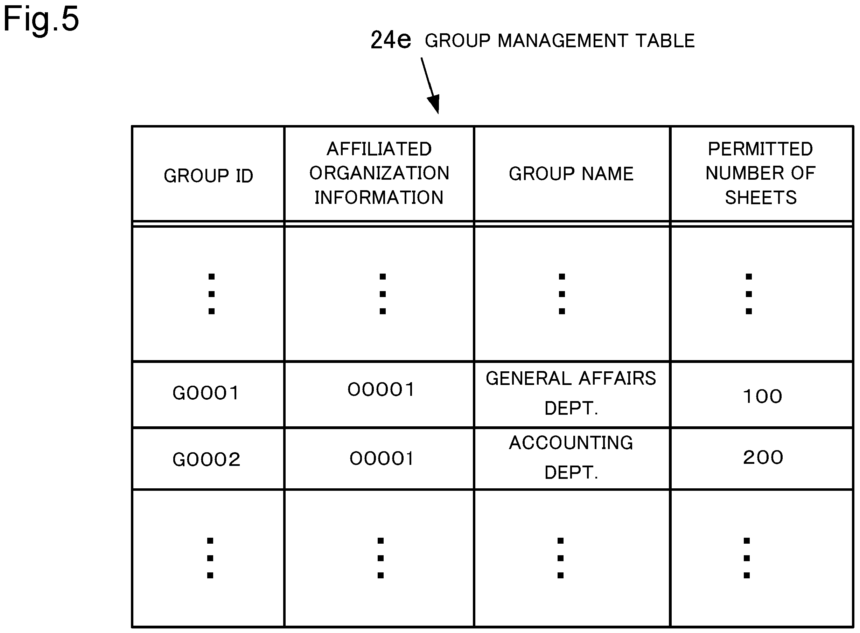

Fig. 5 presents an example of the group management table 24e.

As shown in Fig. 5, the group management table 24e indicates the group ID, the affiliated organization information indicating the organization to which the group belongs, with the organization ID, the name of the group (hereinafter, "group name"), and the number of sheets per month permitted to be subjected to the image processing operation by the group (hereinafter, "permitted number of sheets"), with respect to each of the groups. In Fig. 5, the group management table 24e only shows a part of specific values. The group ID is assigned by the control device 25 of the document processing apparatus 20, when the group is registered in the document processing apparatus 20. The permitted number of sheets is determined such that the total of the permitted number of sheets of all the groups in the organization does not exceed the licensed number of sheets.

As shown in Fig. 2, the storage device 24 contains an apparatus management table 24f for managing the image forming apparatus.

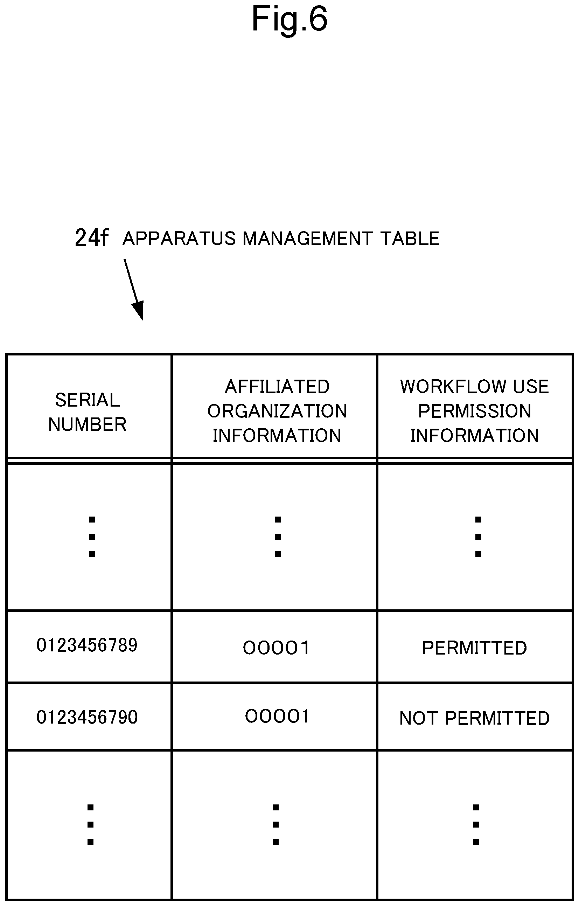

Fig. 6 presents an example of the apparatus management table 24f.

As shown in Fig. 6, the apparatus management table 24f indicates the identification information of the image forming apparatus (hereinafter, "serial number"), the affiliated organization information indicating the organization to which the image forming apparatus belongs, with the organization ID, and workflow use permission information indicating whether the image forming apparatus is permitted to utilize the workflow, with respect to each of the image forming apparatuses. In Fig. 6, the apparatus management table 24f only shows a part of specific values.

As shown in Fig. 2, the storage device 24 contains a workflow management table 24g for managing the workflow.

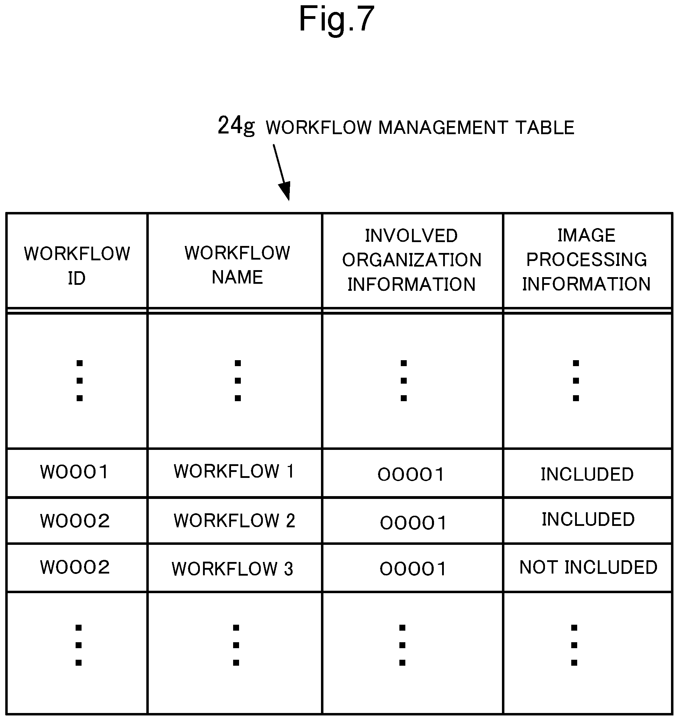

Fig. 7 presents an example of the workflow management table 24g.

As shown in Fig. 7, the workflow management table 24g indicates the identification information of the workflow (hereinafter, "workflow ID"), the name of the workflow (hereinafter, "workflow name"), involved organization information indicating the organization involved with the workflow, with the organization ID, and image processing operation information indicating whether the workflow includes the image processing operation, with respect to each of the workflows. In Fig. 7, the workflow management table 24g only shows a part of specific values. Examples of the workflow including the image processing operation include a workflow including extracting characters from the inputted document through the OCR process, generating a searchable PDF file on the basis of the document and characters, and transmitting the generated searchable PDF file to a specific destination as the processing result, and a workflow including extracting characters from the inputted document through the OCR process, generating a file in Microsoft (registered trademark) Word format, and transmitting the generated file to a specific destination as the processing result. In the case of a workflow that does not include the image processing operation, for example, the inputted document is transmitted to a specific destination, as the processing result.

As shown in Fig. 2, the storage device 24 contains a remainder management table 24h, for managing the remaining number of sheets (remaining processing amount) permitted to the group for the image processing operation.

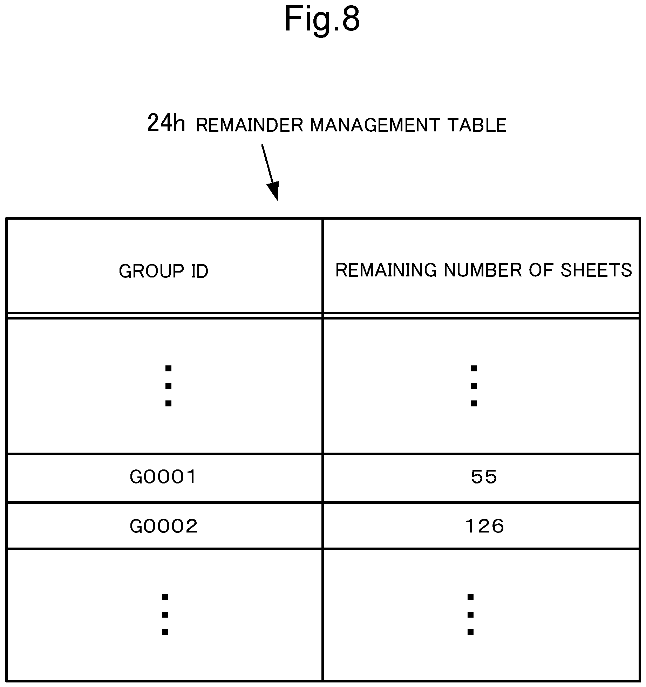

Fig. 8 presents an example of the remainder management table 24h.

As shown in Fig. 8, the remainder management table 24h indicates the group ID, and the remaining number of sheets permitted to the group for the image processing operation, with respect to each of the groups. In Fig. 8, the remainder management table 24h only shows a part of specific values.

The control device 25 shown in Fig. 2 includes, for example, a processor such as a central processing unit (CPU), a read-only memory (ROM) containing programs and various types of data, and a random-access memory (RAM) serving as the operating region for the CPU of the control device 25. The CPU of the control device 25 executes the program stored in the storage device 24 or the ROM of the control device 25. The control device 25 acts as a controller that controls the overall operation of the document processing apparatus 20, by executing the document processing program 24a.

The control device 25 acts, by executing the document processing program 24a, as a document processor 25a that executes the workflow including executing a specific processing with respect to the document inputted to the document processing apparatus 20, and outputting the processing result to a specific destination. The document processor 25a generates a webpage to be displayed on the web browser which will be subsequently described. Hereafter, the display on the web browser is created on the basis of the webpage data, generated by the document processor 25a. Since the detail of the displaying operation on the web browser is already known, the description of such technique will be skipped.

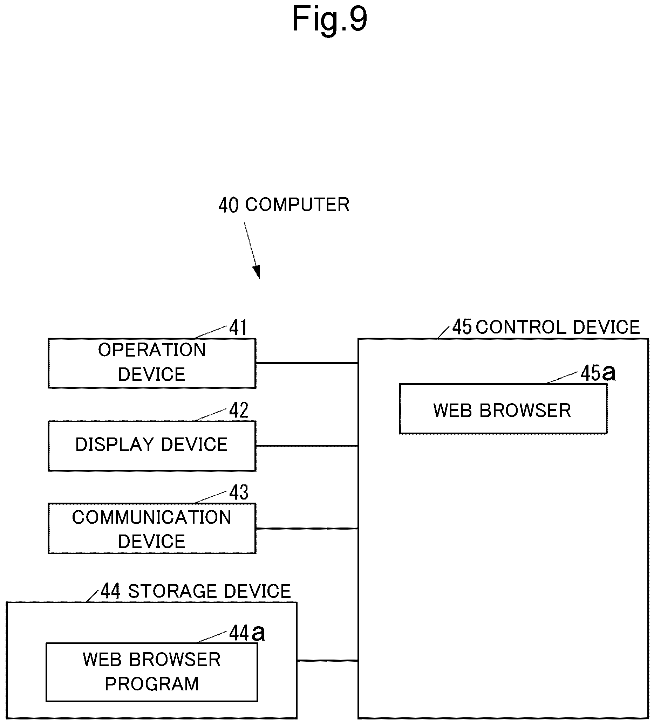

Fig. 9 is a block diagram showing a configuration of the computer 40, configured as a PC.

As shown in Fig. 9, the computer 40 includes an operation device 41 including, for example, a keyboard and a mouse for inputting various operations, a display device 42, for example including an LCD for displaying various types of information, a communication device 43 that performs communication with an external device, via a network such as a LAN or the internet, or directly through wired or wireless communication, a storage device 44 including a non-volatile memory unit such as a semiconductor memory or an HDD, for storing various types of information, and a control device 45 that controls the overall operation of the computer 40.

The storage device 44 contains a program for the web browser (hereinafter, "web browser program") 44a. The web browser program 44a may be, for example, installed in the computer 40 during the manufacturing process thereof, additionally installed in the computer 40 from an external storage medium such as a USB memory, or additionally installed in the computer 40 from the network.

The control device 45 includes, for example, a CPU, a ROM containing programs and various types of data, and a RAM serving as the operation region for the CPU of the control device 45. The CPU of the control device 45 executes the program stored in the storage device 44 or the ROM of the control device 45.

The control device 45 acts as a processor that activates the web browser 45a, by executing the web browser program 44a.

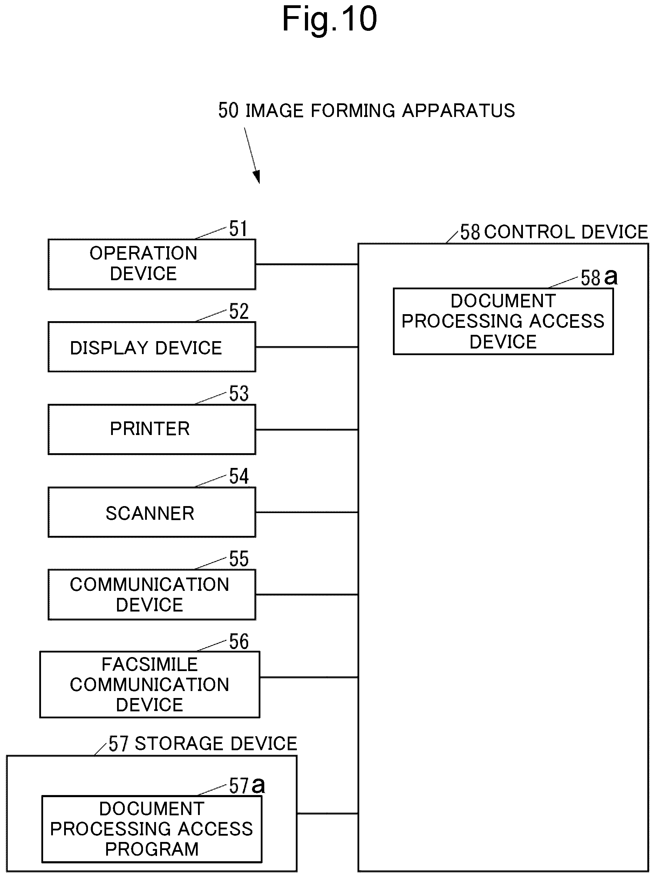

Fig. 10 is a block diagram showing a configuration of the image forming apparatus 50, configured as an MFP.

As shown in Fig. 10, the image forming apparatus 50 is a computer, including an operation device 51 including, for example, buttons for inputting various operations, a display device 52, for example including an LCD for displaying various types of information, a printer 53 including, for example, an electrophotographic image forming mechanism, for printing an image on a recording medium such as a paper sheet, a scanner 54 that reads an image from a document, a communication device 55 that performs communication with an external device, via a network such as a LAN or the internet, or directly through wired or wireless communication, a facsimile communication device 56 that performs facsimile communication with a non-illustrated external facsimile machine, via a communication line such as a public telephone network, a storage device 57 including a non-volatile memory unit such as a semiconductor memory or an HDD, for storing various types of information, and a control device 58 that controls the overall operation of the image forming apparatus 50.

The storage device 57 contains a document processing access program 57a, for making access to the document processing apparatus 20. The document processing access program 57a may be, for example, installed in the image forming apparatus 50 during the manufacturing process thereof, additionally installed in the image forming apparatus 50 from an external storage medium such as a USB memory, or acquired by the control device 58 from a network through the communication device 55, and additionally installed in the image forming apparatus 50.

The control device 58 includes, for example, a CPU, a ROM containing programs and various types of data, and a RAM serving as the operation region for the CPU of the control device 58. The CPU of the control device 58 executes the program stored in the storage device 57 or the ROM of the control device 58. The control device 58 acts as a controller that controls the overall operation of the image forming apparatus 50, by executing the document processing access program 57a.

The control device 58 also acts, by executing the document processing access program 57a, as a document processing access device 58a that makes access to the document processing apparatus 20.

Hereunder, an operation of the system 10 will be described.

First, an operation of the document processing apparatus 20, performed when the remaining number of sheets, permitted to the group for the image processing operation, is updated, will be described.

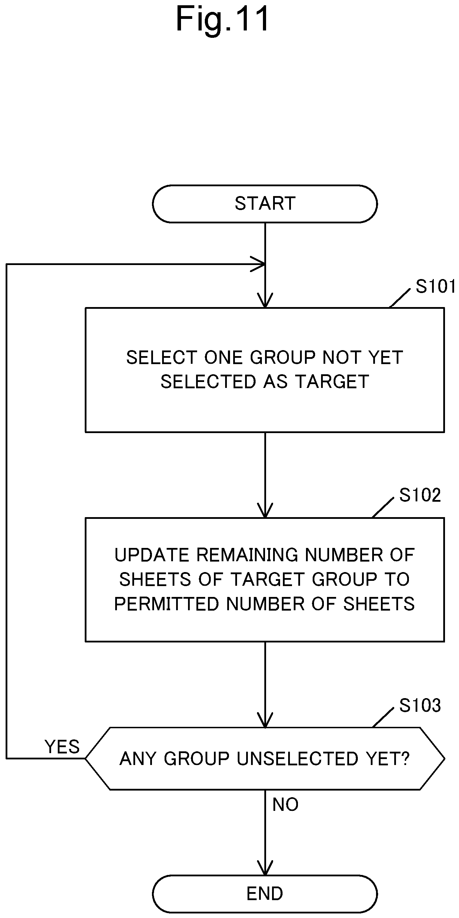

Fig. 11 is a flowchart showing the operation of the document processing apparatus 20, performed when the remaining number of sheets, permitted to the group for the image processing operation, is updated.

The document processor 25a of the document processing apparatus 20 performs the operation shown in Fig. 11, at the beginning of every month.

To perform the operation shown in Fig. 11, the document processor 25a selects a group that has not been subjected to the operation, out of the groups listed in the group management table 24e, as the target of the operation (S101).

After S101, the document processor 25a updates the remaining number of sheets, associated with the group ID of the group selected at S101 in the remainder management table 24h, to the permitted number of sheets, associated with the group ID of the same group in the group management table 24e (S102).

After S102, the document processor 25a decides whether any of the groups listed in the group management table 24e has not been subjected to the operation shown in Fig. 11 (S103).

Upon deciding at S103 that there is a group that has not been subjected to the operation shown in Fig. 11, among the groups listed in the group management table 24e (YES at S103), the document processor 25a executes the operation of S101.

Upon deciding at S103 that there is no group that has not been subjected to the operation shown in Fig. 11, among the groups listed in the group management table 24e (NO at S103), the document processor 25a finishes the operation shown in Fig. 11.

Hereunder, an operation of the system 10, performed when the user utilizes the document processing apparatus 20 through the computer 40, will be described.

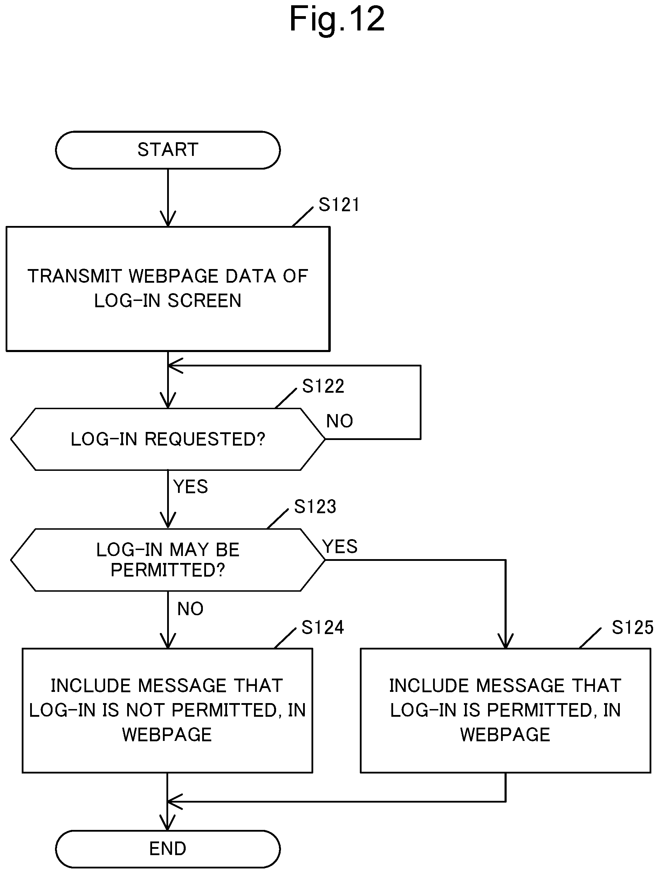

When the user intends to log in to the document processing apparatus 20 through the computer 40, the document processing apparatus 20 operates as follows. Fig. 12 is a flowchart showing an operation of the document processing apparatus 20, performed when the user logs in thereto through the computer 40.

When the user makes access to the document processing apparatus 20, through the web browser 45a of the computer 40, the document processor 25a of the document processing apparatus 20 starts the operation shown in Fig. 12.

As shown in Fig. 12, the document processor 25a of the document processing apparatus 20 transmits the webpage data of the log-in screen, for the user to log in to the document processing apparatus 20, to the web browser 45a via the communication device 23 (S121). In response, the user inputs the user ID and the password through the operation device 41, to the log-in screen displayed on the web browser 45a, in other words inputs the data necessary for logging in to the document processing apparatus 20, to the log-in screen.

After s121, the document processor 25a decides whether the data for logging in to the document processing apparatus 20 has been inputted (S122), and repeats the same operation until the data for logging in to the document processing apparatus 20 is inputted (NO at S 122).

Upon deciding at S122 that the data for logging in to the document processing apparatus 20 has been inputted (YES at S122), the document processor 25a decides whether the user may be permitted to log in, on the basis of the combination of the user ID and the password, inputted to the log-in screen as the data for logging in, and transmitted from the web browser 45a of the computer 40, and the combination of the user ID and the password registered in the user management table 24d (S123). When the combination of the user ID and the password inputted to the log-in screen is included in the user management table 24d, the document processor 25a decides that the user may be permitted to log in, and when the combination of the user ID and the password inputted to the log-in screen is not included in the user management table 24d, the document processor 25a decides that the user should not be permitted to log in.

Upon deciding at S123 that the user should not be permitted to log in (NO at S123), the document processor 25a transmits data of the webpage, including a message to the effect that the log-in by the user is not permitted, to the web browser 45a of the computer 40 (S124). Thereafter, the operation shown in Fig. 12 is finished. In view of the content displayed on the web browser 45a of the computer 40, the user is made aware that the log-in has not been permitted.

Upon deciding at S123 that the user may be permitted to log in (YES at S123), the document processor 25a transmits data of the webpage, including a message to the effect that the log-in by the user has been permitted, to the web browser 45a of the computer 40 (S125). Thereafter, the operation shown in Fig. 12 is finished. In view of the content displayed on the web browser 45a of the computer 40, the user is made aware that the log-in has been permitted.

Hereunder, an operation of the document processing apparatus 20, performed when the permitted number of sheets is specified in the group management table 24e, will be described.

The organization managing user determines, in the log-in state to the document processing apparatus 20 through the computer 40, the permitted number of sheets for all the groups belonging to the organization to which the organization managing user him/herself belongs, through the computer 40, such that the total of the permitted number of sheets, of all the groups belonging to the organization to which the organization managing user belongs, becomes equal to or fewer than the licensed number of sheets specified in the organization management table 24c, for the organization to which the organization managing user belongs. Accordingly, the document processor 25a receives the permitted number of sheets of all the groups, from the computer 40 via the communication device 23. The document processor 25a updates the permitted number of sheets thus far specified in the group management table 24e, to the permitted number of sheets determined as above by the organization managing user.

Hereunder, an operation of the document processing apparatus 20, performed when the workflow use permission information is specified in the apparatus management table 24f, will be described.

The organization managing user selects through the computer 40, in the log-in state to the document processing apparatus 20 through the computer 40, one or more image forming apparatuses permitted to utilize the workflow, out of the image forming apparatuses listed in the apparatus management table 24f for the organization to which the organization managing user belongs, so as not to exceed the licensed number of apparatuses specified in the organization management table 24c, for the organization to which the organization managing user belongs. Accordingly, the document processor 25a receives the information indicating the image forming apparatus permitted to utilize the workflow, from the computer 40 via the communication device 23. The document processor 25a then writes "Permitted", as the workflow use permission information associated with the image forming apparatus permitted to utilize the workflow, in the apparatus management table 24f. In the case of receiving the information indicating the image forming apparatus not permitted to utilize the workflow, the document processor 25a writes "Not Permitted" as the workflow use permission information associated with the image forming apparatus not permitted to utilize the workflow, in the apparatus management table 24f.

Hereunder, an operation of the document processing apparatus 20, performed when the is specified in the workflow management table 24g, will be described.

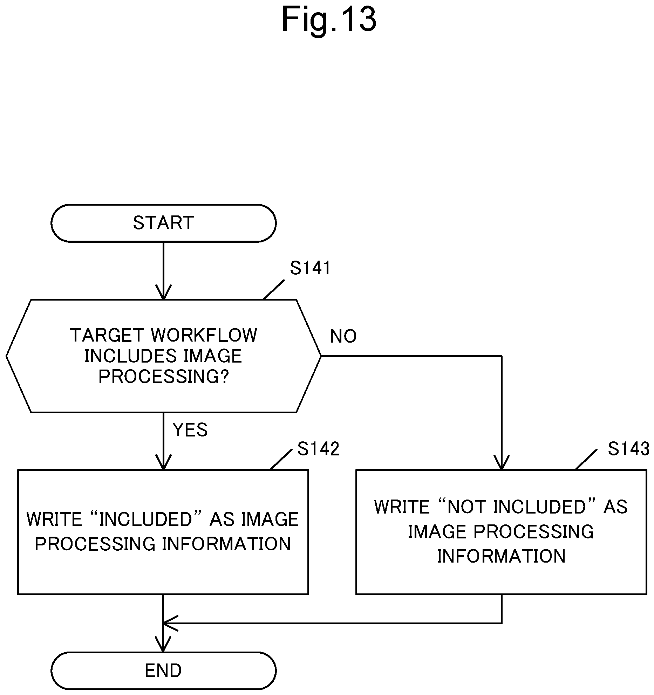

Fig. 13 is a flowchart showing the operation of the document processing apparatus 20, performed when the image processing operation information is specified in the workflow management table 24g.

In the log-in state to the document processing apparatus 20 through the computer 40, the organization managing user or the general user generates a workflow on the computer 40, and registers the generated workflow in the document processing apparatus 20, through the computer 40. In other words, the document processor 25a receives the generated workflow from the computer 40 through the communication device 23, and registers the workflow in the document processing apparatus 20. When the workflow is registered, the document processor 25a of the document processing apparatus 20 performs the operation shown in Fig. 13.

As shown in Fig. 13, document processor 25a decides whether the workflow newly registered in the document processing apparatus 20 (hereinafter "target workflow", in the description of the operation shown in Fig. 13) includes the image processing operation (S141).

Upon deciding at S141 that the target workflow includes the image processing operation, the document processor 25a writes "Included" indicating that the target workflow includes the image processing operation, as the image processing operation information associated with the target workflow, in the workflow management table 24g (S142).

Upon deciding at S141 that the target workflow does not include the image processing operation, the document processor 25a writes "Not Included" indicating that the target workflow does not include the image processing operation, as the image processing operation information associated with the target workflow, in the workflow management table 24g (S143). After S142 or S143, the operation shown in Fig. 13 is finished.

Hereunder, an operation of the document processing apparatus 20, performed when the document is uploaded through the computer 40, will be described.

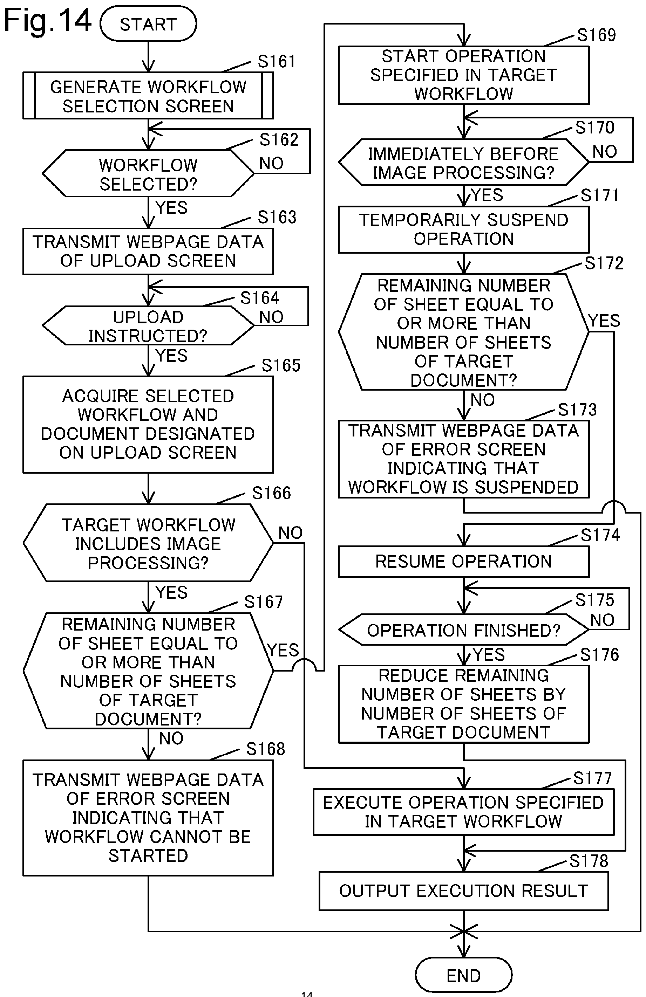

Fig. 14 is a flowchart showing the operation of the document processing apparatus 20, performed when the document is uploaded through the computer 40.

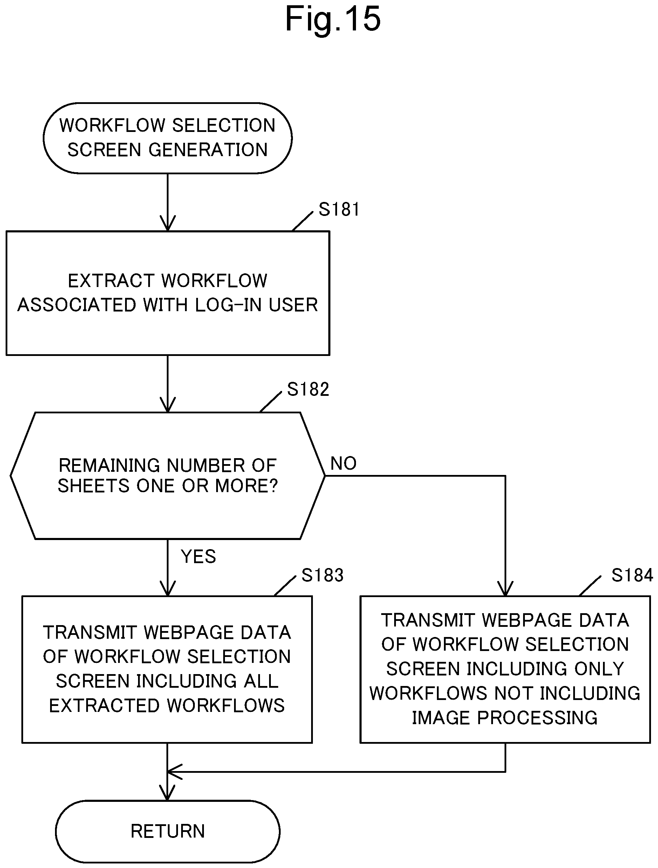

The general user instructs the document processing apparatus 20, in the log-in state to the document processing apparatus 20 through the computer 40, to start the uploading operation of the document to the document processing apparatus 20, through the webpage. When the instruction to start the uploading operation is made, the document processor 25a of the document processing apparatus 20 executes the operation shown in Fig. 14. Hereinafter, in the description of the operation shown in Fig. 14 and Fig. 15, the general user who has logged in to the document processing apparatus 20 through the computer 40 will be referred to as "log-in user".

As shown in Fig. 14, first the document processor 25a executes a workflow selection screen generation process, to generate a webpage of the workflow selection screen for selecting the workflow (S161).

Fig. 15 is a flowchart showing the workflow selection screen generation process included in Fig. 14. As shown in Fig. 15, the document processor 25a extracts the workflow associated with the log-in user, more specifically the workflow associated in the workflow management table 24g with the organization ID associated with the user ID of the log-in user in the user management table 24d (S181).

After S181, the document processor 25a decides whether the remaining number of sheets for the image processing operation, permitted to the group to which the log-in user belongs, more specifically the remaining number of sheets associated in the remainder management table 24h with the group ID associated with the user ID of the log-in user, in the user management table 24d, is one or more (S182).

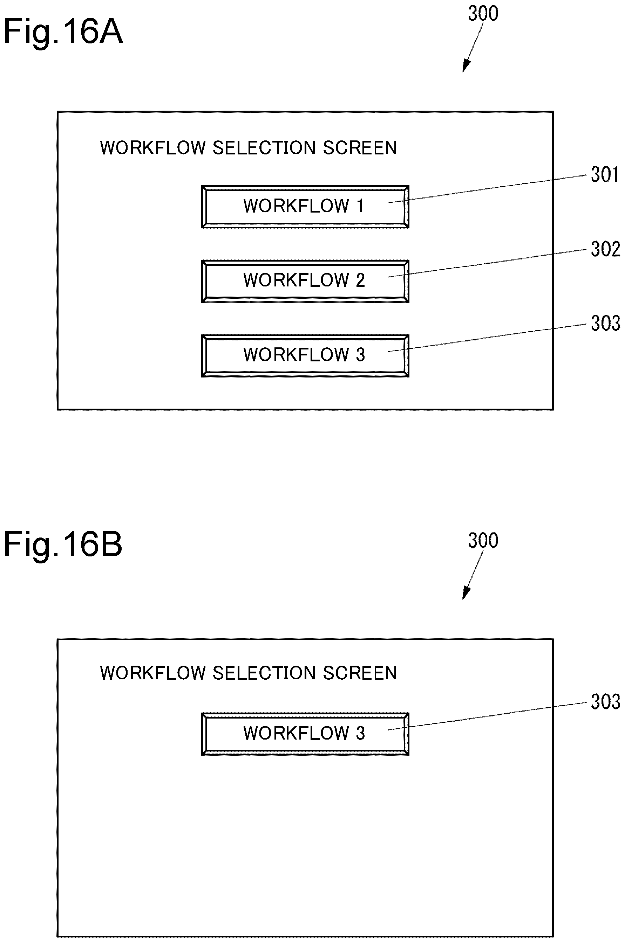

Upon deciding at S182 that the remaining number of sheets for the image processing operation, permitted to the group to which the log-in user belongs, is one or more, the document processor 25a generates the webpage data of a workflow selection screen 300 (see Fig. 16A), indicating all the workflows extracted at S181, and transmits the data generated by the computer 40 to the web browser 45a (S183). Upon receipt of the data, the web browser 45a of the computer 40 causes the display device 42 to display the workflow selection screen 300. Accordingly, the log-in user is enabled to select the workflow to be executed by the document processing apparatus 20, on the workflow selection screen 300 displayed by the web browser 45a of the computer 40.

Upon deciding at S182 that the remaining number of sheets for the image processing operation, permitted to the group to which the log-in user belongs, is fewer than one (NO at S182), the document processor 25 of the information processing system 20 generates the webpage data of the workflow selection screen 300 (see Fig. 16B), indicating only the workflows, specified in the workflow management table 24g as not including the image processing operation, out of the workflows extracted at S181, and transmits the generated data to the web browser 45a of the computer 40 (S184). Upon receipt of such data, the web browser 45a of the computer 40 causes the display device 42 to display the workflow selection screen 300. Accordingly, the log-in user is enabled to select the workflow to be executed by the document processing apparatus 20, on the workflow selection screen 300 displayed by the web browser 45a of the computer 40.

After the document processor 25 of the information processing system 20 finishes the operation of S183 or S184, the workflow selection screen generation process shown in Fig. 15 is finished.

Fig. 16A presents an example of the workflow selection screen 300, including all the workflows associated with the log-in user. Fig. 16B presents an example of the workflow selection screen 300, from which the workflow including the image processing operation is excluded, out of the workflows associated with the log-in user.

The workflow selection screen 300 shown in Fig. 16A includes workflow selection buttons 301 to 303 corresponding to the respective workflows, for selection of the workflow. The document processor 25a displays, on the workflow selection button, the workflow name associated in the workflow management table 24g with the workflow associated with the workflow selection button. From Fig. 16A and Fig. 16B, the user can recognize that the workflow associated with the workflow selection button 301, and the workflow associated with the workflow selection button 302 include the image processing operation.

Referring again to Fig. 14, after S161 the document processor 25 of the information processing system 20 decides whether the workflow has been selected on the workflow selection screen (S162), until deciding that the workflow has been selected on the workflow selection screen.

Upon deciding that the workflow has been selected on the workflow selection screen, in other words that the instruction to select one of the workflows on the workflow selection screen has been inputted to the operation device 21 (YES at S162), the document processor 25a transmits the webpage data of the upload screen, for uploading the document, to the web browser 45a of the computer 40 (S163). Accordingly, the log-in user can input the instruction to designate the document to be uploaded, to the upload screen displayed by the web browser 45a of the computer 40.

After S163, the document processor 25a decides whether the uploading of the document has been instructed on the upload screen (S164), until deciding that the uploading of the document has been instructed on the upload screen.

Upon deciding at S164 that the uploading of the document has been instructed on the upload screen, in other words that the instruction to designate the document to be uploaded upload screen has been inputted to the operation device 21, through the operation based on the upload screen, the document processor 25a acquires the workflow selected on the workflow selection screen at S162, and the document designated on the upload screen at S164 (S165).

After S165, in other words after the document has been uploaded, the document processor 25a decides whether the workflow acquired at S165 (hereinafter "target workflow", in the description of the operation shown in Fig. 14) includes the image processing operation, on the basis of the workflow management table 24g (S166).

Upon deciding at S166 that the target workflow includes the image processing operation, the document processor 25a decides whether the remaining number of sheets for the image processing operation, permitted to the group to which the log-in user belongs, in other words the remaining number of sheets associated in the remainder management table 24h with the group ID associated with the user ID of the log-in user in the user management table 24d, is equal to or more than the number of sheets of the document acquired at S165 (hereinafter "target document", in the description of the operation shown in Fig. 14) (S167). Here, "the number of sheets of the document" corresponds to the data amount of the document. In other words, in this embodiment the data amount of the document is indicated by how many sheets of image data the document contains.

Upon deciding at S167 that the remaining number of sheets for the image processing operation, permitted to the group to which the log-in user belongs, is not equal to or more than the number of sheets of the target document (NO at S167), the document processor 25a transmits the webpage data of an error screen indicating that the workflow is unable to be started, because the permitted number of sheets for the image processing operation is exceeded, to the web browser 45a of the computer 40 (S168). Thereafter, the operation shown in Fig. 14 is finished. Accordingly, the log-in user can recognize the detail of the error, in view of the error screen displayed by the web browser 45a of the computer 40.

In contrast, upon deciding at S167 that the remaining number of sheets for the image processing operation, permitted to the group to which the log-in user belongs, is equal to or more than the number of sheets of the target document (YES at S 167), the document processor 25a starts the operation specified in the target workflow, with respect to the target document (S169).

As the operations specified in the target workflow are sequentially executed, after starting the operation at S169, the document processor 25a decides whether the time immediately before the execution of the image processing operation, one of the operations included in the target workflow, has been reached (S170).

Upon deciding at S170 that it is the time immediately before the execution of the image processing operation included in the target workflow (YES at S170), the document processor 25a temporarily suspends the execution of the operation specified in the target workflow (S171).

After S171, the document processor 25a decides whether the remaining number of sheets for the image processing operation, permitted to the group to which the log-in user belongs, in other words the remaining number of sheets associated in the remainder management table 24h with the group ID associated with the user ID of the log-in user in the user management table 24d, is equal to or more than the number of sheets of the target document (S172).

Upon deciding at S172 that the remaining number of sheets for the image processing operation, permitted to the group to which the log-in user belongs, is not equal to or more than the number of sheets of the target document (NO at S172), the document processor 25a transmits the webpage data of the error screen indicating that the workflow is suspended, because the permitted number of sheets for the image processing operation is exceeded, to the web browser 45a of the computer 40 (S173). Thereafter, the operation shown in Fig. 14 is finished. Accordingly, the log-in user can recognize the detail of the error, in view of the error screen displayed by the web browser 45a of the computer 40.

In contrast, upon deciding at S172 that the remaining number of sheets for the image processing operation, permitted to the group to which the log-in user belongs, is equal to or more than the number of sheets of the target document (YES at S 172), the document processor 25a resumes the operation temporarily suspended at S171 (S174).

After S174, the document processor 25a decides whether the execution of the operations specified in the target workflow has been finished (S175), until deciding that the execution of the operations specified in the target workflow has been finished.

Upon deciding at S175 that the execution of the operations specified in the target workflow has been finished (YES at S175), the document processor 25a reduces the remaining number of sheets for the image processing operation, permitted to the group to which the log-in user belongs, in other words the remaining number of sheets associated in the remainder management table 24h with the group ID associated with the user ID of the log-in user in the user management table 24d, by the number of sheets of the target document (S176).

Upon deciding at S166 that the target workflow does not include the image processing operation (NO at S166), the document processor 25a executes the operation specified in the target workflow, with respect to the target document (S177).

After S176 or S177, the document processor 25a outputs the information indicating the execution result of the operations specified in the target workflow, to the destination designated in the target workflow (S178). Thereafter, the operation shown in Fig. 14 is finished.

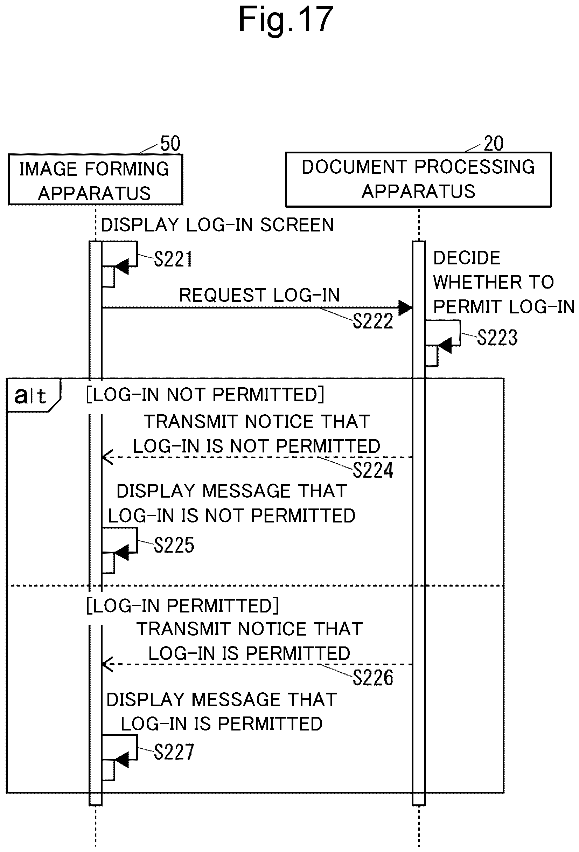

Hereunder, an operation of the system 10, performed when the user utilizes the document processing apparatus 20, through the image forming apparatus 50, will be described. Fig. 17 is a sequence chart showing an operation of the system 10, performed when the user logs in to the document processing apparatus 20 through the image forming apparatus 50.

An instruction to start up the document processing access device 58a of the image forming apparatus 50 is inputted by the user, to the operation device 51 of the image forming apparatus 50. The control device 58 starts up the document processing access device 58a of the image forming apparatus 50, according to the instruction inputted. Upon being made to start up, the document processing access device 58a displays the log-in screen, for the user to log in to the document processing apparatus 20, on the display device 52 as shown in Fig. 17 (S221). The user inputs the user ID and the password to the log-in screen displayed on the display device 52, so that the log-in instruction, including the user ID and the password, and requesting permission to log in to the document processing apparatus 20, is inputted to the operation device 51.

When the log-in instruction is inputted to the operation device 51, the document processing access device 58a requests the document processing apparatus 20 to permit the log-in, based on the user ID and the password indicated by the log-in instruction (S222).

Upon receipt of the request of S222, the document processor 25a of the document processing apparatus 20 decides whether the user may be permitted to log in, on the basis of the combination of the user ID and the password in the request of S222, and the combination of the user ID and the password listed in the user management table 24d (S223). When the combination of the user ID and the password in the request of S222 is included in the user management table 24d, the document processor 25a decides that the user may be permitted to log in, but when the combination of the user ID and the password in the request of S222 is not included in the user management table 24d, the document processor 25a decides that the user should not be permitted to log in.

Upon deciding at S223 that the user should not be permitted to log in, document processor 25a transmits a notice to the effect that the user is not permitted to log in, to the image forming apparatus 50 (S224).

Upon receipt of the notice transmitted at S224, the document processing access device 58a of the image forming apparatus 50 displays a message to the effect that the log-in has not been permitted, on the display device 52 (S225). In view of such message on the display device 52, the user is made aware that the log-in has not been permitted.

Upon deciding at S223 that the user may be permitted to log in, the document processor 25a of the document processing apparatus 20 transmits a notice to the effect that the user has been permitted to log in, to the image forming apparatus 50 (S226).

Upon receipt of the notice transmitted at S226, the document processing access device 58a of the image forming apparatus 50 displays a message to the effect that the log-in has been permitted, on the display device 52 (S225). In view of such message on the display device 52, the user is made aware that the log-in has been permitted.

Hereunder, an operation of the system 10, performed when the document read by the image forming apparatus 50 is transmitted to the document processing apparatus 20, will be described.

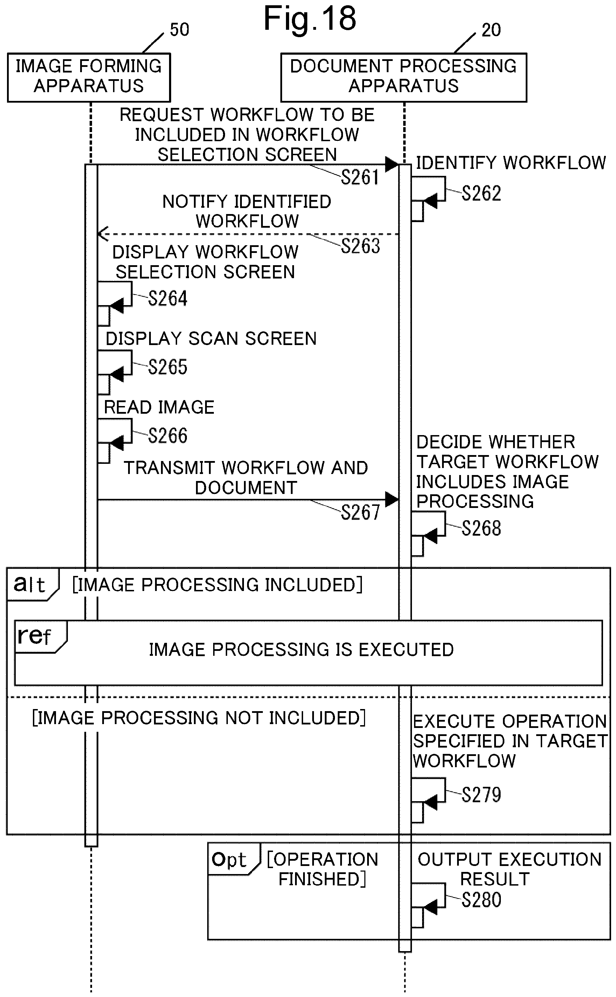

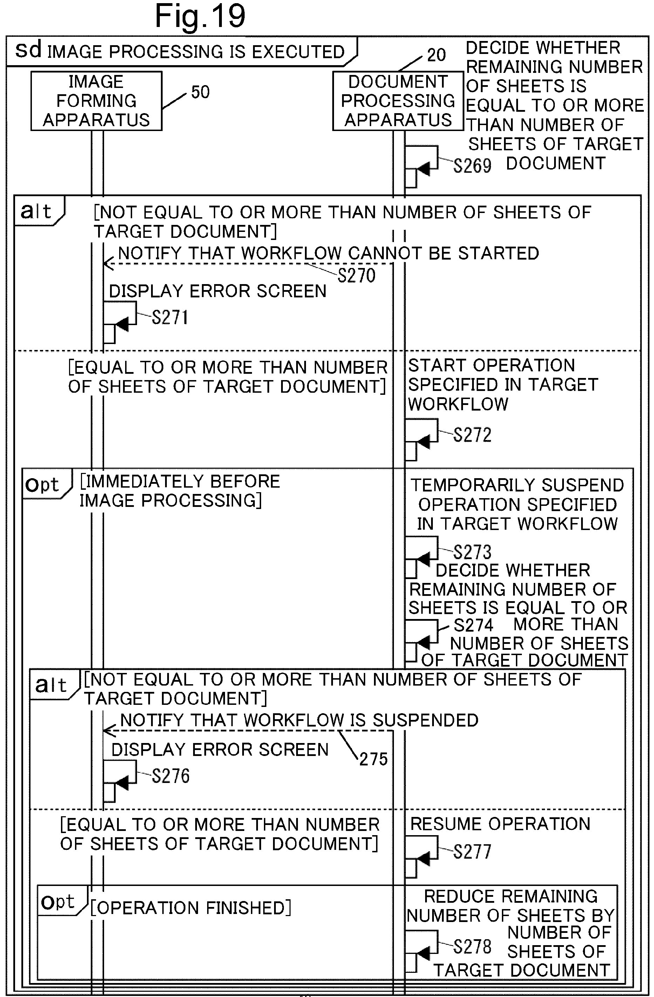

Fig. 18 is a sequence chart showing an operation of the system 10, performed when the document read by the image forming apparatus 50 is transmitted to the document processing apparatus 20. Fig. 19 is a sequence chart of the operation performed when the image processing operation is included in Fig. 18.

The general user inputs, in the log-in state to the document processing apparatus 20 through the image forming apparatus 50, a transmission instruction requesting to transmit the document read by the image forming apparatus 50 to the document processing apparatus 20, to the operation device 51 of the image forming apparatus 50. In the following description of the operations shown in Fig. 18 to Fig. 20, the general user who has logged in to the document processing apparatus 20 through the image forming apparatus 50 will be referred to as "log-in user".

When the transmission instruction is inputted to the operation device 51, the document processing access device 58 of the image forming apparatus 50 requests the workflow to be included in the workflow selection screen to the document processing apparatus 20, as shown in Fig. 18 and Fig. 19 (S261).

Upon receipt of the request of S261, the document processor 25a of the document processing apparatus 20 executes a workflow identifying operation for identifying the workflow to be included in the workflow selection screen (S262).

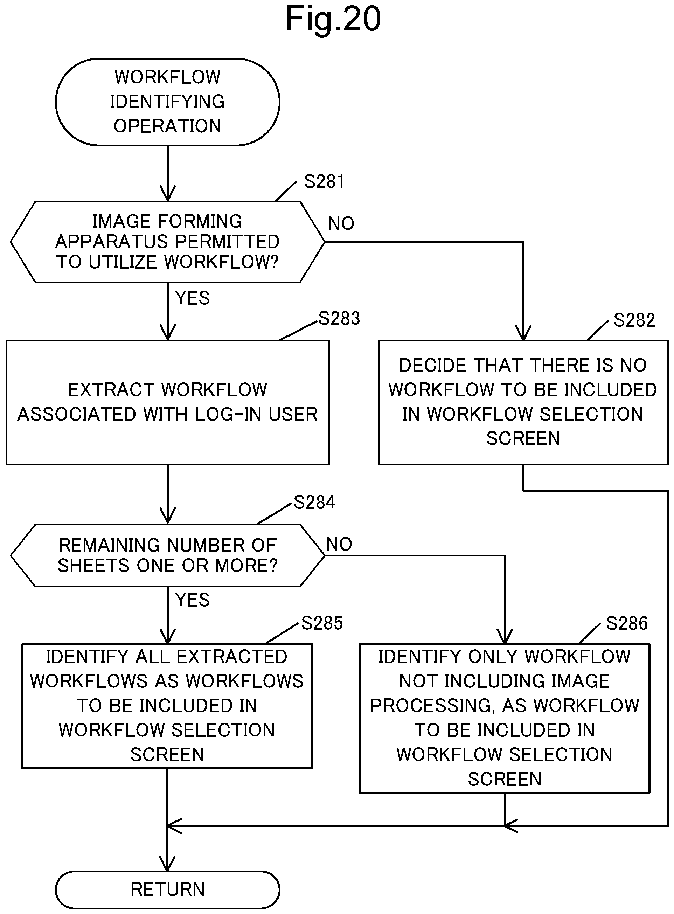

Fig. 20 is a flowchart showing the workflow identifying operation in Fig. 18. The document processor 25a of the document processing apparatus 20 decides whether the image forming apparatus 50 is permitted to utilize the workflow, on the basis of the workflow use permission information associated with the serial number of the image forming apparatus 50, in the apparatus management table 24 (S81).

Upon deciding at S281 that the image forming apparatus 50 is not permitted to utilize the workflow, the document processor 25a decides that there is not workflow that may be included in the workflow selection screen (S282).

In contrast, upon deciding at S281 that the image forming apparatus 50 is permitted to utilize the workflow, the document processor 25a extracts the workflow associated with the log-in user, in other words the workflow associated in the workflow management table 24g with the organization ID, associated with the user ID of the log-in user in the user management table 24d (S283).

After S283, the document processor 25a decides whether the remaining number of sheets for the image processing operation, permitted to the group to which the log-in user belongs, more specifically the remaining number of sheets associated in the remainder management table 24h with the group ID associated with the user ID of the log-in user, in the user management table 24d, is one or more (S284).

Upon deciding at S284 that the remaining number of sheets for the image processing operation, permitted to the group to which the log-in user belongs, is one or more, the document processor 25a identifies all the workflows extracted at S283, as the workflow to be included in the workflow selection screen (S285).

Upon deciding at S284 that the remaining number of sheets for the image processing operation, permitted to the group to which the log-in user belongs, is fewer than one, the document processor 25a identifies only the workflow indicated as not including the image processing operation in the workflow management table 24g, out of the workflows extracted at S283, as the workflow to be included in the workflow selection screen (S286).

Upon finishing the operation of S282, S285, or S286, the document processor 25a finishes the workflow identifying operation shown in Fig. 20.

As shown in Fig. 18 and Fig. 19, after finishing the workflow identifying operation of S262, the document processor 25a notifies the workflow identified in the workflow identifying operation of S262 to the image forming apparatus 50 (S263).

Upon receipt of the notice of S263, the document processing access device 58 of the image forming apparatus 50 displays the workflow selection screen including the workflow notified at S263, on the display device 52 (S264). Accordingly, the log-in user is enabled to select the workflow to be executed by the document processing apparatus 20, in the workflow selection screen displayed on the display device 52.

After S264, when the selection instruction, to select one workflow out of the workflows displayed, is inputted to the operation device 51 through the operation based on the workflow selection screen, the document processing access device 58a displays a scan screen for reading an image from a source document, on the display device 52 (S265). The log-in user sets the source document on the scanner 54, and instructs to start the scanning, on the scan screen.

After S265, when the instruction to start the scanning is inputted to the operation device 51, through the operation based on the scan screen, the document processing access device 58a causes the scanner 54 to read the image from the source document (S266).

After S266, the document processing access device 58a transmits the information indicating the workflow selected according to the selection instruction, and the document, represented by the image read at S266, to the document processing apparatus 20 through the communication device 55 (S267).

Upon receipt of the information indicating the workflow, and the document transmitted at S267, the document processor 25a of the document processing apparatus 20 decides whether the workflow indicated by the information received from the image forming apparatus 50 (hereinafter "target workflow", in the description of the operation shown in Fig. 18 and Fig. 19) includes the image processing operation, on the basis of the workflow management table 24g (S268).

Upon deciding at S268 that the target workflow includes the image processing operation, the document processor 25a decides whether the remaining number of sheets for the image processing operation, permitted to the group to which the log-in user belongs, in other words the remaining number of sheets associated in the remainder management table 24h with the group ID associated with the user ID of the log-in user in the user management table 24d, is equal to or more than the number of sheets of the document received from the image forming apparatus 50 (hereinafter "target document", in the description of the operation shown in Fig. 18 and Fig. 19) (S269).

Upon deciding at S269 that the remaining number of sheets for the image processing operation, permitted to the group to which the log-in user belongs, is not equal to or more than the number of sheets of the target document, the document processor 25a notifies the image forming apparatus 50 that the workflow is unable to be started, because the permitted number of sheets for the image processing operation is exceeded (S270).

Upon receipt of the notice of S270, the document processing access device 58 of the image forming apparatus 50 displays the error screen indicating that the workflow is unable to be started, because the permitted number of sheets for the image processing operation is exceeded, on the display device 52 (S271). Thereafter, the operations shown in Fig. 18 and Fig. 19 are finished. The log-in user recognizes the detail of the error, in view of the error screen displayed on the display device 52.

In contrast, upon deciding at S269 that the remaining number of sheets for the image processing operation, permitted to the group to which the log-in user belongs, is equal to or more than the number of sheets of the target document, the document processor 25a of the document processing apparatus 20 starts the operation specified in the target workflow, with respect to the target document (S272).

After S272, upon deciding that, as the operations specified in the target workflow are sequentially executed after starting the target workflow, the time immediately before the execution of the image processing operation, one of the operations included in the target workflow, has been reached. the document processor 25a temporarily suspends the operation specified in the target workflow (S273).

After S273, the document processor 25a decides whether the remaining number of sheets for the image processing operation, permitted to the group to which the log-in user belongs, in other words the remaining number of sheets associated in the remainder management table 24h with the group ID associated with the user ID of the log-in user in the user management table 24d, is equal to or more than the number of sheets of the target document (S274).

Upon deciding at S274 that the remaining number of sheets for the image processing operation, permitted to the group to which the log-in user belongs, is not equal to or more than the number of sheets of the target document, the document processor 25a notifies the image forming apparatus 50 that the workflow is suspended, because the permitted number of sheets for the image processing operation is exceeded (S275). At S275, in addition to, or instead of notifying the image forming apparatus 50 that the workflow is suspended, because the permitted number of sheets for the image processing operation is exceeded, the document processor 25a may at least either notify the log-in user that the workflow is suspended, because the permitted number of sheets for the image processing operation is exceeded, by e-mail, or transmit the webpage data of the error screen indicating that the workflow is suspended, because the permitted number of sheets for the image processing operation is exceeded, to the web browser 45a of the computer 40.

Upon receipt of the notice of S275, the document processing access device 58 of the image forming apparatus 50 displays the error screen indicating that the workflow is suspended, because the permitted number of sheets for the image processing operation is exceeded, on the display device 52 (S276). Thereafter, the operations shown in Fig. 18 and Fig. 19 are finished. The log-in user recognizes the detail of the error, in view of the error screen displayed on the display device 52.

Upon deciding at S274 that the remaining number of sheets for the image processing operation, permitted to the group to which the log-in user belongs, is equal to or more than the number of sheets of the target document, document processor 25a of the document processing apparatus 20 resumes the operation temporarily suspended at S273 (S277).

When the operations specified in the target workflow are finished after S277, the document processor 25a reduces the remaining number of sheets for the image processing operation, permitted to the group to which the log-in user belongs, in other words the remaining number of sheets associated in the remainder management table 24h with the group ID associated with the user ID of the log-in user in the user management table 24d, by the number of sheets of the target document (S278).

Upon deciding at S268 that the target workflow does not include the image processing operation, the document processor 25a executes the operation specified in the target workflow, with respect to the target document (S279).

After S278 or S279, in other words after finishing the operations specified in the target workflow, the document processor 25a outputs the execution result of the operations specified in the target workflow, to the destination designated in the target workflow (S280). Thereafter, the operations shown in Fig. 18 and Fig. 19 are finished.

As described thus far, when the remaining number of sheets for the image processing operation permitted to the user is one or more (YES at S182, or YES at S284), the document processing apparatus 20 enables the user to select all the workflows associated with the user, as the workflow to be executed (S183 or S285). When the remaining number of sheets for the image processing operation permitted to the user is fewer than one (NO at S182, or NO at S284), the document processing apparatus 20 enables the user to select only the workflow not including the image processing operation, as the workflow to be executed, out of all the workflows associated with the user (S184 or S286). Therefore, the available workflow can be controlled, according to the utilization status of the image processing operation.

After the workflow is selected by the user, when the remaining number of sheets for the image processing operation permitted to the user is equal to or more than the number of sheets of the inputted document (YES at S167, or "the remaining number of sheets is equal to or more than the number of sheets of the target document" at S269), the document processing apparatus 20 starts to execute the workflow selected by the user (S 169 or S272). In contrast, after the workflow is selected by the user, when the remaining number of sheets for the image processing operation permitted to the user is not equal to or more than the number of sheets of the inputted document (NO at S167, or "the remaining number of sheets is not equal to or more than the number of sheets of the target document" at S269), the document processing apparatus 20 does not start to execute the workflow selected by the user (S168 or S270). Therefore, the execution of the workflow can be controlled, according to the utilization status of the image processing operation, and the number of sheets of the inputted document.

When the remaining number of sheets for the image processing operation, permitted to the party to which the user belongs, is equal to or more than the number of sheets of the inputted document (YES at S172, or "the remaining number of sheets is equal to or more than the number of sheets of the target document" at S274), after starting to execute the workflow, and before executing the image processing operation according to the workflow, the document processing apparatus 20 continues with executing the workflow (S174 or S277). In contrast, when the remaining number of sheets for the image processing operation, permitted to the party to which the user belongs, is not equal to or more than the number of sheets of the inputted document (NO at S 172, or "the remaining number of sheets is not equal to or more than the number of sheets of the target document" at S274), after starting to execute the workflow, and before executing the image processing operation according to the workflow, the document processing apparatus 20 suspends the execution of the workflow (S173 or S275). Therefore, the execution of the workflow can be controlled, not only according to the utilization status of the image processing operation by the user him/herself, but also according to the utilization status of the image processing operation by other users belonging to the group to which the first-mentioned user belongs. Consequently, in the case where, for example, the remaining number of sheets for the image processing operation, permitted to the group to which the user belongs, has been reduced by another user of the group to which the user belongs, after the workflow is started and before the image processing operation is executed according to the workflow, the document processing apparatus 20 can control the execution of the workflow, on the basis of the remaining number of sheets for the image processing operation, permitted to the group to which the user belongs.

In the case where the user has logged in to the document processing apparatus 20, through the image forming apparatus not permitted to utilize the workflow (NO at S281), the document processing apparatus 20 disables the user from selecting the workflow to be executed (S263 and S282), which leads to improved convenience in use.

According to the foregoing embodiment, the document processing apparatus 20 restricts a specific workflow from being displayed on the workflow selection screen, thereby disabling the user from selecting such workflow as the workflow to be executed. However, different methods may be adopted, to disable the user from selecting a specific workflow as the workflow to be executed. For example, the document processing apparatus 20 may display the specific workflow in an inoperable state such as a grayed-out state, on the workflow selection screen, thereby disabling the user from selecting the workflow as the workflow to be executed.

Thus, although the available workflow is unable to be controlled according to the utilization status of the image processing operation, with the existing technique, the arrangement according to the foregoing embodiment enables the available workflow to be controlled according to the utilization status of the image processing operation.

## Claims

1. A document processing apparatus (20) comprising:
a document processor (25A) that executes a workflow including executing a specific processing, including an image processing operation, with respect to an inputted document, and outputting an execution result to a specific destination; and
an operation device (21) that receives an input of an instruction from a user,
wherein the document processor (25A) is configured to:
allow, when there is a remaining processing amount of the image processing operation permitted to the user, the operation device (21) to select all the workflows associated with the user, as the workflow to be executed; and
allow, when there is no remaining processing amount of the image processing operation, the operation device (21) to select only the workflow not including the image processing operation, out of all the workflows associated with the user, as the workflow to be executed.

2. The document processing apparatus (20) according to claim 1,
wherein the document processor (25A) is configured to:
start the workflow selected by the user, when the remaining processing amount is equal to or more than a data amount of the document, after the workflow is selected by the user; and
keep from starting the workflow selected by the user, when the remaining processing amount is not equal to or more than a data amount of the document, after the workflow is selected by the user.

3. The document processing apparatus (20) according to claim 2,
wherein the document includes an image read from a source document, after the workflow is selected by the user.

4. The document processing apparatus (20) according to claim 1,
wherein the document processor (25A) is configured to:
keep executing the workflow, when the remaining processing amount of the image processing operation, permitted to an affiliated organization of the user, is equal to or larger than a data amount of the document, after start of the workflow and before execution of the image processing operation according to the workflow; and
suspend the workflow, when the remaining processing amount of the image processing operation, permitted to the affiliated organization, is not equal to or larger than the data amount of the document, after the start of the workflow and before the execution of the image processing operation according to the workflow.

5. The document processing apparatus (20) according to claim 4, further comprising a display device,
wherein the document processor (25A) causes the display device to display a content indicating an error, when the workflow is suspended.

6. The document processing apparatus (20) according to claim 1,
wherein the document processor (25A) disables the workflow to be executed from being selected through the operation device (21), when the user logs in to the document processing apparatus (20) through an image forming apparatus not permitted to utilize the workflow.

7. A computer-readable, non-transitory recording medium having a document processing program recorded thereon, the document processing program being configured to cause a computer to act as a document processor (25A) that executes a workflow including executing a specific processing, including an image processing operation, with respect to an inputted document, and outputting an execution result to a specific destination,
wherein the document processor (25A) is configured to:
allow, when there is a remaining processing amount of the image processing operation permitted to the user, an operation device (21) to select all the workflows associated with the user, as the workflow to be executed; and
allow, when there is no remaining processing amount of the image processing operation, the operation device (21) to select only the workflow not including the image processing operation, out of all the workflows associated with the user, as the workflow to be executed.
